# DEMANDE DE BREVET EUROPEEN

(11) **EP 1 276 043 A1**
(43) Date de publication de la demande: **15.01.2003**
(21) Numéro de dépôt: 02076519.4
(22) Date de dépôt: 18.04.2002
(51) Int. Cl.: G06F 9/44

(54) **Méthode de parcours d'un arbre d'objets pour invoquer une méthode spécifique sur certains objets dudit arbre**

(30) Priorité: 10.07.2001 FR 0109167
(71) Demandeur: Koninklijke Philips Electronics N.V., 5621 BA Eindhoven (NL)
(72) Inventeur: Devillers, Sylvain, c/o Soci-t- Civile S.P.I.D., 75008 Paris (FR); Caprioglio, Myriam, c/o Soci-t- Civile S.P.I.D., 75008 Paris (FR)
(74) Mandataire: de la Fouchardière, Marie-Noelle

(57) **Abrégé**

L'invention consiste à définir une classe générique et une pluralité de classes spécifiques qui héritent de ladite classe générique. Lesdites classes spécifiques sont destinées à être instanciées pour générer un arbre d'objets. La classe générique comporte une méthode générique d'invocation d'une méthode spécifique d'une classe spécifique sur les objets de l'arbre qui sont des instances de cette classe spécifique. Pour un objet courant de l'arbre, la méthode générique invoque ladite méthode spécifique si l'objet courant est une instance de ladite clase spécifique et elle s'exécute récursivement pour les variables de l'objet courant qui sont des instances de l'une desdites classes spécifiques.

## Description

### Domaine de l'invention

L'invention concerne un procédé pour parcourir un arbre qui contient des objets instances d'une ou plusieurs classes spécifiques en vue d'invoquer une méthode spécifique d'une desdites classes spécifiques sur les objets dudit arbre qui sont des instances de ladite classe spécifique.

L'invention concerne aussi une structure de données écrite dans un langage de programmation objet qui comporte une ou plusieurs classes spécifiques destinées à être instanciées pour générer un arbre d'objets, au moins une desdites classes spécifiques comportant au moins une méthode spécifique.

L'invention concerne aussi un document écrit dans un langage de programmation objet qui comporte des objets instances de classes spécifiques définies dans une telle structure de données.

L'invention concerne aussi un programme écrit dans un langage de programmation objet, comportant des instructions pour la manipulation d'un tel document lorsqu'il est exécuté par un processeur.

L'invention concerne aussi un équipement électronique comportant une mémoire qui contient un tel programme, un tel document ou une telle structure de données.

Elle concerne aussi un signal qui transporte un tel programme, un tel document ou une telle structure de données.

L'invention a de nombreuses applications en particulier pour le traitement de modèles de documents.

### Arrière plan technologique de l'invention

Un tel arbre d'objets est par exemple décrite dans la spécification « Document Object Model (DOM), level 1 specification, version 1.0, October 1 1998 » définie par le consortium W3C pour modéliser des documents du genre HTML ou XML.

Lorsqu'on manipule un tel arbre d'objets, il est souvent nécessaire de parcourir l'arbre pour exécuter une méthode spécifique sur certains objets. Un but de l'invention est de proposer une solution particulièrement efficace pour parcourir un arbre d'objets instances d'une ou plusieurs classes spécifiques en vue d'invoquer une méthode spécifique d'une desdites classes spécifiques sur les objets dudit arbre qui sont des instances de cette classe spécifique.

### Résumé de l'invention

Ce but est atteint avec un procédé pour parcourir un arbre d'objets selon l'une des revendications 1 ou 2 de la présente demande, avec une structure de données selon la revendication 3, un document selon la revendication 4 et un programme selon la revendication 5.

L'invention consiste notamment à dissocier le parcours de l'arbre de l'exécution des méthodes spécifiques. En effet, conformément à l'invention, la méthode générique d'invocation d'une méthode spécifique a pour fonction de parcourir l'arbre et d'invoquer ladite méthode spécifique lorsqu'elle rencontre un objet sur lequel cette méthode doit être invoquée. Les méthodes spécifiques effectuent un traitement spécifique sur un objet courant. Elles ne gèrent pas la navigation dans l'arbre d'objets.

L'invention permet ainsi de simplifier l'écriture des structures de données dans lesquelles il faut gérer le parcours d'un arbre d'objets pour l'exécution de certaines méthodes sur certains objets de l'arbre.

### Brève description des figures

D'autres détails et avantages de l'invention apparaîtront dans la description qui va suivre en regard des dessins annexés donnés à titre d'exemples non limitatifs et dans lesquels :
- la figure 1 est une représentation schématique d'une structure de données selon l'invention,
- la figure 2 donne un exemple d'un arbre qui est généré par instanciation de la structure de données représentée à la figure 1,
- la figure 3 est un diagramme en blocs d'un exemple de procédé selon l'invention,
- la figure 4 est un exemple d'équipement selon l'invention susceptible de recevoir des signaux, notamment des signaux de transport d'un programme ou d'un document selon l'invention, et doté d'une mémoire de stockage d'un tel programme, d'un tel document et d'une telle structure de données.

### Description d'un mode de réalisation préférentiel de l'invention

D'une façon générale, une structure de données selon l'invention comporte une classe générique GC et une pluralité de classes spécifiques SC_{i(i=1,...,N)}. Chaque classe est susceptible de comporter une ou plusieurs variables d'instance notamment des variables d'instance de type objet. Une variable d'instance de type objet est constituée par un objet ou un tableau d'objets instance(s) d'une classe spécifique. Une structure de données selon l'invention est définie de telle sorte que son instanciation génère un arbre TR d'objets obᵢ.

Conformément à l'invention, une ou plusieurs classes spécifiques SCᵢ comportent une méthode spécifique sMᵢ. Les méthodes spécifiques sMᵢ sont dotées d'un nombre quelconque d'arguments P_{i,j} (où j est un entier naturel quelconque). La classe générique GC comporte une méthode générique gM d'invocation d'une méthode spécifique sMᵢ d'une classe spécifique SCᵢ sur les objets obᵢ de l'arbre TR qui sont des instances de ladite classe spécifique SCᵢ. Les classes spécifiques SCᵢ héritent de cette classe générique GC de telle sorte qu'elles contiennent implicitement la méthode générique gM. Pour exécuter la méthode générique gM les arguments suivants doivent être spécifiés :
- la méthode spécifique sMᵢ à invoquer,
- la classe spécifique SCᵢ dont les objets obᵢ sur lesquels la méthode spécifique sMᵢ doit être invoquée sont des instances,
- les arguments P_{i,j} de la méthodes sMᵢ, lorsqu'elle en a.

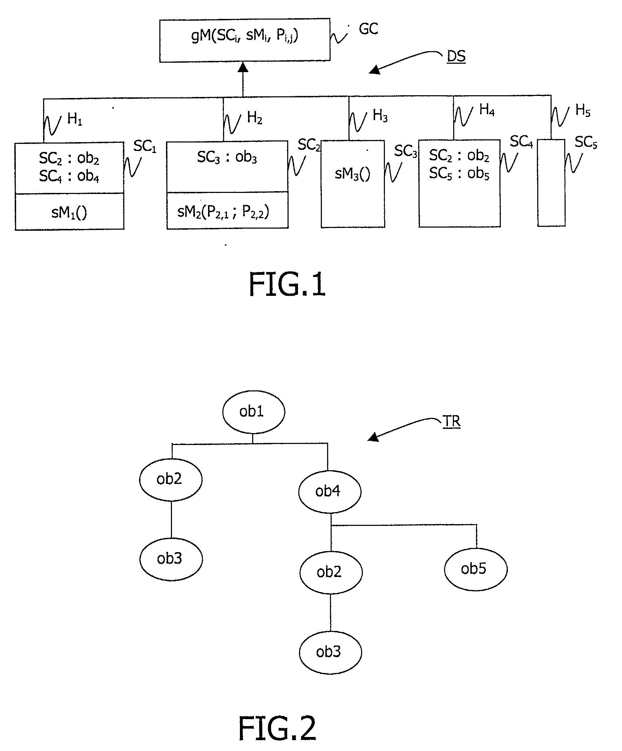

Sur la figure 1 on a représenté de façon schématique un exemple d'une telle structure de données. D'après la figure 1, la structure de données DS comporte une classe générique GC et cinq classes spécifiques référencées SC₁, SC₂, SC₃, SC₄ et SC₅ respectivement. La classe spécifique SC₁ comporte deux variables d'instance qui sont des objets instances des classes spécifiques SC₂ et SC₄ respectivement. Ces objets sont nommés ob₂ et ob₄ respectivement. La classe spécifique SC₂ comporte une variable d'instance qui est un objet instance de la classe spécifique SC₃ et qui est nommé ob₃. La classe spécifique SC₄ enfin comporte deux variables d'instances qui sont des objets instances des classes spécifiques SC₂ et SC₅ respectivement et qui sont nommés ob₂ et ob₅ respectivement.

Sur la figure 2 on a représenté un exemple d'arbre TR qui constitue une instance de la structure de données DS définie en regard de la figure 1. Cet arbre TR comporte un objet ob₁ qui pointe vers une premier objet ob₂ et vers un objet ob₄. Le premier objet ob₂ est une première instance de la classe SC₂. L'objet ob₄ est une instance de la classe SC₄. Le premier objet ob₂ pointe vers un premier objet ob₃ qui est une première instance de la classe SC₃. L'objet ob₄ pointe vers un second objet ob₂ qui est une seconde instance de la classe SC₂, et vers un objet ob₅ qui est une instance de la classe SC₅. Le second objet ob₂ pointe vers un second objet ob₃ qui est une seconde instance de la classe SC₃.

D'après la figure 1, la classe générique GC comporte une méthode générique appelée gM(SCᵢ, sMᵢ, P_{i,j}) qui est une méthode générique d'invocation d'une méthode spécifique sMᵢ sur les objets de l'arbre TR qui sont des instances d'une classe spécifique SCᵢ. Lorsque la méthode générique gM est exécutée pour invoquer une méthode spécifique sMᵢ qui a un ou plusieurs arguments P_{i,j}, ce ou ces arguments P_{i,j} sont spécifiés comme arguments de la méthode générique gM. Les classes spécifiques SM_{i(i=1,...,5)} héritent de la classe générique GC : sur la figure 1, cette relation d'héritage est symbolisée par les flèches H_{i(i=1,...,5)}. Les classes spécifiques SC₁, SC₂ et SC₃ comportent chacune une méthode spécifique notée sM₁, sM₂ et sM₃ respectivement. La méthode spécifique sM₂ a deux arguments notés P_{2,1} et P_{2,2} respectivement. Les autres méthodes spécifiques sM₁ et sM₃ n'ont pas d'arguments.

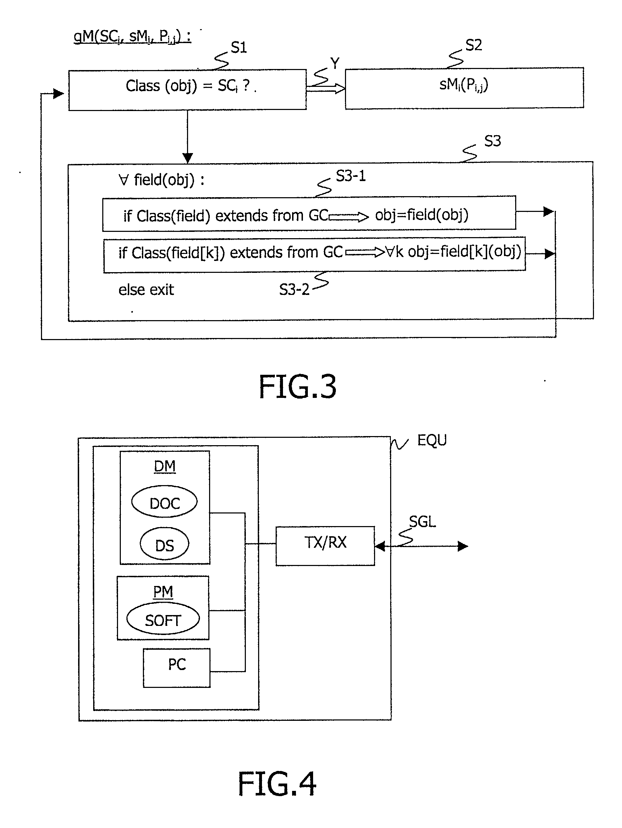

Sur la figure 3 on a représenté un organigramme d'une méthode générique gM(SCᵢ, sMᵢ, P_{i,j}) de parcours d'un arbre pour invoquer la méthode spécifique sMᵢ sur les objets dudit arbre qui sont des instances de la classe spécifique SCᵢ. Cette méthode générique consiste à parcourir l'arbre à partir de sa racine, et à effectuer les étapes suivantes pour un objet courant de l'arbre noté obj :
- étape S1 : test pour déterminer si l'objet courant obj est une instance de la classe spécifique SCᵢ (« Class(obj)=SCᵢ ? »)
- étape S2 : si l'objet courant est une instance de la classe SCᵢ (flèche Y), invocation de la méthode spécifique sMᵢ(P_{i,j})
- étape S3 : parcours des variables d'instance (field) de l'objet courant obj, et pour chaque variable d'instance :
   - si la variable d'instance est un objet instance d'une classe qui hérite de la classe générique GC (« Class(field)extends from GC »), exécution récursive de la méthode générique gM(SCᵢ, sMᵢ, P_{i,j}) pour cet objet (étape S3-1)
   - si la variable d'instance est un tableau d'objets instances d'une classe qui hérite de la classe générique GC (« Class(field[k]) extends from GC »), exécution récursive de la méthode générique gM(SCᵢ, sMᵢ, P_{i,j}) pour chaque objet (étape S3-2).

L'invention s'applique notamment pour le traitement de modèles de documents, par exemple pour le traitement d'un modèle XML-schema qui décrit le format d'un document XML (XML-schema et XML sont respectivement un projet de recommandation et une recommandation du consortium W3C, disponibles par exemple sur le site Internet http://ww.w3.org). Un tel schéma constitue un arbre d'objets appelés éléments qui sont des instances d'une classe « Element ». Un élément peut comporter un ou plusieurs autres éléments. Pour chaque élément, le schéma définit notamment un nom et un type. En général pour simplifier l'écriture du schéma, on utilise des types nommés. Un type nommé est défini une fois pour toute dans le schéma, et il est ensuite appelé par son nom. Lorsqu'on veut utiliser un tel schéma, il est alors nécessaire de résoudre les types des éléments qu'il contient, c'est-à-dire de rechercher la définition du type nommé de chaque élément rencontré. Pour cela, la classe Element comporte une méthode de résolution de type « resolveElementType ».

De façon avantageuse cette méthode est une méthode spécifique au sens de la présente invention. La classe Element est alors une classe spécifique au sens de l'invention, qui hérite d'une classe générique. Cette classe générique comporte une méthode générique d'invocation d'une méthode spécifique. Cette méthode générique est exécutée sur chaque élément du schéma pour invoquer la méthode de résolution de type « resolveElementType ». La structure de données dans laquelle sont définies la classe spécifique «Element » et la classe générique dont elle hérite est donc une structure de données selon l'invention. De même, le schéma est un document selon l'invention, et tout programme qui manipule ce schéma est un programme selon l'invention.

En appliquant l'invention, on évite d'avoir à gérer le parcours de l'arbre dans le corps de la méthode de résolution de type.

La méthode générique ainsi définie est avantageusement utilisée pour invoquer d'autres méthodes spécifiques qui seraient définies dans la classe Elément, par exemple une méthode spécifique « printName » d'affichage du nom des éléments du schéma, utilisée pour déboguer ledit schéma.

Sur la figure 4, on a représenté un schéma d'un équipement électronique EQU doté :
- d'un ensemble à microprocesseur MP qui comporte notamment une mémoire de données DM, une mémoire de programme PM et un processeur PC permettant d'exécuter les programmes stockés dans la mémoire de programmes PM
- un dispositif de transmission TX/RX permettant de recevoir des signaux, notamment des signaux qui transportent des programmes.

Lorsque l'équipement EQU reçoit un signal SGL qui transporte un programme SOFT selon l'invention, ce programme SOFT est stocké dans la mémoire de programme PM. Lorsque l'équipement EQU reçoit un signal SGL qui transporte une structure de donnée DS selon l'invention et/ou un document DOC selon l'invention, cette structure de données DS et/ou ce document DOC sont stockés dans la mémoire de données DM.

## Revendications

1. Procédé pour parcourir un arbre (TR) qui contient des objets (ob) instances d'une ou plusieurs classes spécifiques (SCᵢ) en vue d'invoquer une méthode spécifique (sMᵢ) d'une desdites classes spécifiques sur les objets dudit arbre qui sont des instances de ladite classe spécifique, **caractérisé en ce qu'**il consiste à définir une classe générique (GC) dont héritent lesdites classes spécifiques, qui comporte une méthode générique (gM(SCᵢ, sMᵢ, P_{i,j}))) d'invocation d'une méthode spécifique (sMᵢ) sur un objet instance d'une classe spécifique (SCᵢ), et qui consiste, lorsqu'elle est exécutée sur un objet courant, à invoquer ladite méthode spécifique si l'objet courant est une instance de ladite classe spécifique, et à s'exécuter récursivement pour les variables de l'objet courant qui sont des instances de l'une desdites classes spécifiques.

2. Procédé selon la revendication 1, **caractérisé en ce que** lorsque ladite méthode générique est exécutée pour invoquer une méthode spécifique dotée d'un ou de plusieurs arguments (P_{i,j}), le ou les arguments de ladite méthode spécifique sont spécifiés comme arguments de ladite méthode générique.

3. Structure de données (DS) écrite dans un langage de programmation objet, comportant une ou plusieurs classes spécifiques (SCᵢ) destinées à être instanciées pour générer un arbre (TR) d'objets (ob), au moins une desdites classes spécifiques comportant au moins une méthode spécifique (sMᵢ), **caractérisée en ce qu'**elle comporte une classe générique (GC) dont héritent lesdites classes spécifiques, qui comporte une méthode générique (gM(SCᵢ, sMᵢ, P_{i,j})) d'invocation d'une méthode spécifique sur un objet instance d'une classe spécifique, et qui consiste, lorsqu'elle est exécutée sur un objet courant, à invoquer ladite méthode spécifique si l'objet courant est une instance de ladite classe spécifique, et à s'exécuter récursivement pour les variables de l'objet courant qui sont des instances de l'une desdites classes spécifiques.

4. Document (DOC) écrit dans un langage de programmation objet qui comporte des objets instances de classes spécifiques définies dans une structure de données selon la revendication 3.

5. Programme (SOFT) écrit dans un langage de programmation objet, comportant des instructions pour la manipulation d'un document selon la revendication 4 lorsqu'il est exécuté par un processeur.

6. Equipement électronique (EQU) comportant une mémoire (PM) qui contient un programme (SOFT) selon la revendication 5.

7. Equipement électronique (EQU) comportant une mémoire (DM) qui contient une structure de données selon la revendication 3.

8. Equipement électronique (EQU) comportant une mémoire (DM) qui contient un document selon la revendication 4.

9. Signal (SGL) transportant un programme selon la revendication 5.

10. Signal (SGL) transportant un document selon la revendication 4.
